# EUROPEAN PATENT SPECIFICATION

(11) **EP 1 846 282 B1**
(45) Date of publication and mention of the grant of the patent: **10.06.2009**
(21) Application number: 06744416.6
(22) Date of filing: 27.01.2006
(51) Int. Cl.: B62J 1/18, B62J 1/00

(54) **ERGONOMIC SUPPORT STRUCTURE MADE OF COMPOSITE MATERIAL FOR HUMAN BODY PARTS AND METHOD OF MANUFACTURING IT**
ERGONOMISCHE STÜTZSTRUKTUR AUS VERBUNDMATERIAL FÜR MENSCHLICHE KÖRPERTEILE UND HERSTELLUNGSVERFAHREN DAFÜR
STRUCTURE DE SOUTIEN ERGONOMIQUE EN MATERIAU COMPOSITE POUR DES PARTIES DU CORPS HUMAIN ET PROCEDE DE FABRICATION

(30) Priority: 28.01.2005 IT VI20050025
(43) Date of publication of application: 24.10.2007
(73) Proprietor: SELLE ROYAL S.P.A., 36050 Pozzoleone (Vicenza) (IT)
(72) Inventor: SEGATO, Stefano, I-36100 Vicenza (IT)
(74) Representative: Feltrinelli, Secondo Andrea
(86) International application number: PCT/IB2006/000144
(87) International publication number: WO 2006/092678

(56) References cited:
- EP-A- 0 653 279
- US-A- 5 397 162
- US-A- 5 904 396
- US-A1- 2004 090 096
- US-B1- 6 409 865
- PATENT ABSTRACTS OF JAPAN vol. 1995, no. 03, 28 April 1995 (1995-04-28) -& JP 06 344964 A (YAMAHA MOTOR CO LTD), 20 December 1994 (1994-12-20)

## Description

### Field of the invention

This invention finds application in the field of mechanical structures made of special materials, and particularly relates to a support structure of composite material.

Furthermore, the invention relates to a process for making the above structure.

### Background of the invention

Cover pads of foam material are known to be used to enhance comfort and ergonomic benefit in rigid bodies coming in contact, during use, with parts of human bodies, such as seats of composite material for vehicles, bicycle saddles or the like.

Nevertheless, this solution is unacceptably uncomfortably, inconvenient, and aesthetically prejudicial for the parts designed to support the pad, which are wholly covered thereby.

In an attempt to obviate the above drawbacks, gel inserts are being increasingly used at the areas subjected to the highest pressure by users, to provide comfort where this is most needed. Gel is preferable as compared with foam, due to its viscoelastic behavior, which improves distribution of interface pressure in response to static stresses, and improved vibration damping in response to cyclic dynamic stresses, as well as a high elastic after-effect in response to impulsive stresses.

US-A-6,050,964 discloses an elastic fabric structure, having thermoplastic gel thereon, to form an ergonomic support base for the parts covered thereby.

One drawback of this prior art structure is that, although it is undoubtedly comfortable and resilient, the fabric sheath that encapsulates the gel tends to be easily cut and ruptured, with gel tending to leak therefrom. Furthermore, the gel insert, which would be pleasant to the sight, is covered thereby.

Other technical arrangements equivalent to the above are known from US-A-5904396, EP-A2-1382520, US-A-5330249.

US-B-6450572 discloses a saddle having a rigid support frame overlying a double cushion composed of more rigid foam and more resilient foam, on which gel portions are formed, which are designed to undergo changes in shape when they contact moving parts of a user.

While this solution is comfortable and not exposed to undesired damaging, it has the drawback of incorporating a cushion, which makes the structure heavier and unpleasant to the view.

US 2004/090096 discloses all the features of the preamble of the claim 1. In particular, this known saddle comprises a main body made of composite material, a padding made of expanded polyurethane foam and a viscoelastic gel insert arranged inside of the padding.

Unfortunately, the expanded polyurethane foam of the padding is an elastic material, which makes the saddle unable to be adapted to the various conformation of the body of the user. Moreover, also this known saddle incorporates a cushion, which makes the structure heavier and unpleasant to the view.

EP-B1-0653279 discloses a process for making a bicycle saddle having a main body made of plastic material, a first layer of expanded polyurethane foam coupled to the body and a second layer of gel material directly superimposed to the first layer.

While this known process provides a saddle with a viscoelastic layer arranged to come into contact with the body of an user, it has the drawback of incorporating a cushion, which makes the structure unacceptably heavier.

The problem of direct coupling of one composite material to gel inserts has not been solved to date.

### Summary of the Invention

The object of this invention is to overcome the above drawbacks, by providing an ergonomic support structure that is highly efficient and relatively cost-effective.

A particular object is to provide an ergonomic support structure that can be customized, i.e. adapted to the body of any user.

A further object of the invention is to provide an ergonomic support structure that is pleasing to the sight.

Another object of the invention is to provide an ergonomic support structure having a light weight and a high strength.

These objects, as well as other objects that will be more apparent hereafter, are fulfilled by a support structure of composite material according to claim 1.

Thanks to this particular configuration, the ergonomic structure of the invention is highly comfortable, adapted to a huge number applications, such as the fabrication of bicycle saddles, chairs, car seats or the like.

Furthermore, the structure of the invention allows to avoid the use of cushions, that were used as comfort elements in prior art structures. This allows to make structures that are both comfortable and of a very light weight.

Also, direct coupling between the composite and the viscoelastic materials provides an assembly that is highly pleasing to the sight, a non-negligible advantage in the field of sports and leisure, which is highly influenced by fashion and aesthetics.

Advantageously, this at least one insert is placed over said reinforcement member to define a free contact surface for the user susceptible of controlled deformation.

Thanks to this feature, the structure of the invention meets the needs of various users, regardless of specific conformations of the part of the body in contact with the structure. The natural ergonomic quality of the viscoelastic material allows the structure to be easily and comfortable adapted to anyone.

Suitably, the structure of the invention may have a polymeric cover layer, placed above said at least one insert and the top surface of said polymer matrix.

Thanks to this feature, the structure is highly pleasing to the touch and safe, as it protects users from any rupture of the reinforcement member which might otherwise release dangerous splinters and injure users.

Yet another object of the invention is to provide a practical and easily repeatable process for making the ergonomic support structure of the invention.

According to another aspect of the invention there is provided a process for making an ergonomic support structure like the one disclosed above, according to claim 7 and 8.

Thanks to the above process, the support structure of the invention may be formed in a practical and easily repeatable manner.

### Brief description of the drawings

Further features and advantages of the invention will be more apparent from the detailed description of a preferred, non-exclusive embodiment of a structure according to the invention, which is described as a non-limiting example with reference to the annexed drawings, in which:
FIG. 1 is an axonometric view of a support structure according to the invention;
FIG. 2 is an axonometric view of a detail of FIG. 1;
FIG. 3 is a sectioned view of the structure of the invention, as taken along a plane *III-III*;
FIG. 4 is another sectioned view of the structure of the invention, as taken along a plane *IV-IV*;
Fig. 5 shows a flowchart of a process for making the support structure of the invention.

### Detailed description of a preferred embodiment

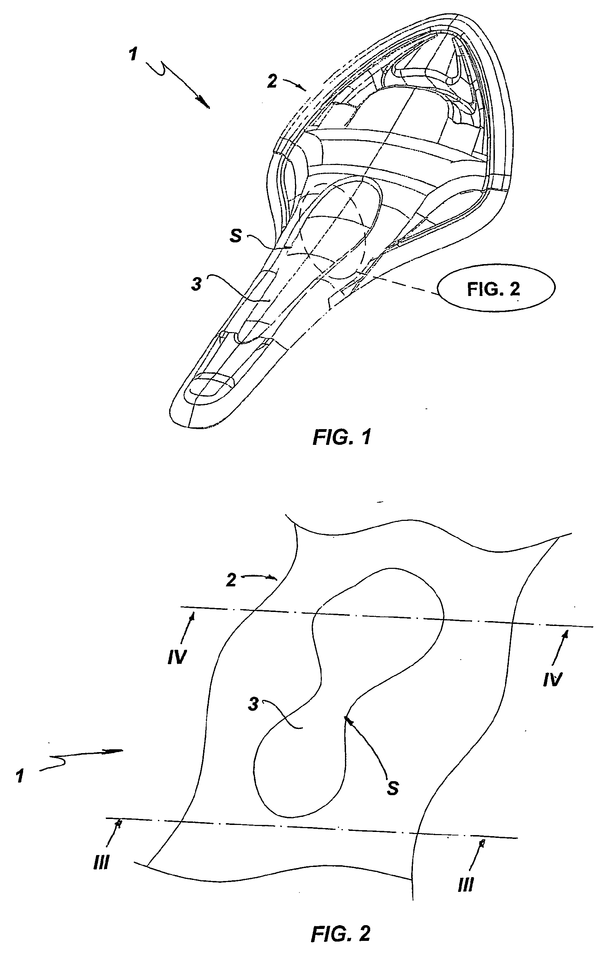

Referring to the above figures, the structure of the invention, generally designated by numeral 1, may be, for instance, a part of a car seat, or a chair or a bicycle saddle, as shown in FIG. 1.

Typically, the structure 1 comprises a main body 2, with a viscoelastic insert 3, preferably made of polyurethane gel, anchored thereto. The insert defines a free contact surface S for the user and, thanks to its natural ergonomic properties, it may be freely placed at the contact areas between the user and the structure 1, e.g. the ischial or prostatic regions, in the case of a bicycle saddle.

The body 2 is made of a composite material which is known to be essentially composed of a reinforcement member 4 associated to a polymer matrix 5, which may be of the thermoplastic or thermosetting type.

Particularly, the reinforcement member 4 has a low density and a high mechanical strength, i.e. a high resistance to compressive and/or tensile and/or bending and/or torsional and/or shearing stresses. Furthermore, as is known, the matrix 5 is essentially composed of one or more thermoplastic or thermosetting resins, possibly reinforced.

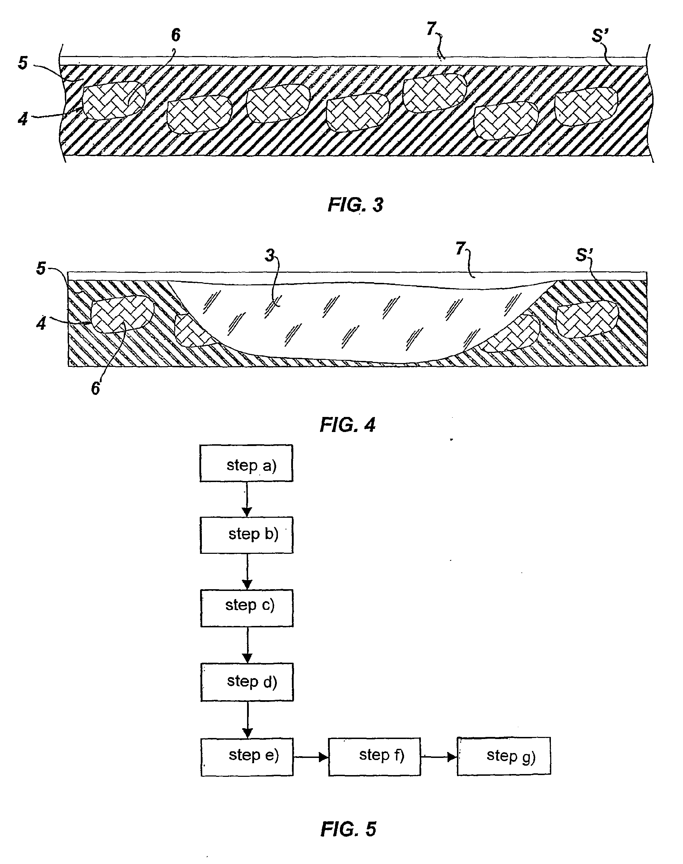

According to the invention, the reinforcement member 4 may include a fibrous membrane 6, e.g. made of carbon, glass fibers or the like, associated to a matrix 5, in which the membrane 6 may be embedded, as particularly shown in FIG. 3.

In such configuration, the insert 3 will be permanently anchored to the body 2 by chemical and/or mechanical bonds, which will be formed during the structure making process that, as set out below, includes a heating step, during which the polymer matrix 5 is polymerized. This provides a monolithic structure 1, in which the inserts 3 are formed of one piece with the body 2, as particularly shown in FIG. 4.

Conveniently, both the reinforcement member 4 and the matrix 5 may comprise reinforcing fibers, particles or nanoparticles.

As mentioned above, the structure 1 may have a polymeric cover layer 7, having protective functions, placed above the insert 3 and the top surface S' of the matrix 5.

Advantageously, the layer 7 may be transparent, so that the aesthetically pleasing connection between the composite material of the body 2 and the gel of the insert 3 is visible.

A process for making the structure 1 includes the following steps.

The first step is step a), in which the reinforcement member 4 is provided in the form of a sheet, including, as mentioned above, the membrane 6 of carbon, glass fibers or the like.

Suitably, the membrane 6 may be preimpregnated with the resin 5, or be in the form of a dry sheet.

In the next step b) a mold is provided, having the shape of the main body 2. If the above membrane 6 is not preimpregnated, the mold may have one or more apertures for injection of the polymer matrix 5 therein, which will be added to the dry membrane 6 at a later time.

Then, in step c), the mold is opened and the reinforcement member 4 is laid thereon, and in the next step d) one or more inserts 3 are further placed thereon.

As is known, the gel of the latter may have various densities. If it is in liquid form, it may be poured into the mold. In this case, the mold will suitably have one or more specially shaped carved housings, for receiving the gel.

Advantageously, the cover layer 7 may be placed in the mold to protect the membrane 6 and the inserts 3, thereby providing the above mentioned advantages.

In the next step e), the mold is sealed and heated to a predetermined operating temperature, possibly after injection of the matrix 5 if, as suggested above, the membrane 6 has been laid in the form of a dry sheet. This temperature may be of 20°C to 300°C, and preferably of about 120°C. The temperature will be typically close to the glass transition temperature of the matrix 5. In this step, chemical and/or mechanical bonds will be formed, thereby providing a monolithic assembly of the body 2, the inserts 3 and possibly the membrane 6.

After a step f), in which the mold is cooled to a predetermined final temperature, of 18°C to 50°C, and preferably of about 20°C, the final step g) will follow, during which the mold is opened, and the finished support structure 1 is removed.

The above disclosure clearly shows that the structure of the invention fulfills the proposed objects and particularly meets the requirement of providing a highly comfortable and customizable support structure.

By directly coupling the composite of the body 2 and the gel of the insert 3, a very comfortable structure is obtained, which is capable of fitting the anthropometric conformation of any user whatever.

The structure of the invention is susceptible to a number of changes and variants, within the inventive concept disclosed in the appended claims. All the details thereof may be replaced by other technically equivalent parts, and the materials may vary depending on different needs.

While the structure has been described with particular reference to the accompanying figures, the numerals referred to in the disclosure and claims are only used for the sake of a better intelligibility of the invention and shall not be intended to limit the claimed scope in any manner.

## Claims

1. An ergonomic support structure (1) of composite material for supporting parts of the human body, comprising a main body (2) and a viscoelastic insert (3), wherein said main body (2) is made of composite material which has at least one reinforcement member (4) and at least one polymer matrix (5), said reinforcement member (4) having a predetermined resistance to compressive and/or shearing stresses and comprising a fibrous membrane (6) which is associated to and embedded in at least one polymer matrix (5), **characterized in that** said at least one insert (3) is anchored in said main body (2) and is placed over said reinforcement member (4) to define a free contact surface (S) for a user susceptible of controlled deformation, said polymer matrix (5) being essentially composed of at least one thermosetting resin heated with said fibrous membrane (6) and said insert (3) at a temperature close to the glass transition temperature thereof so that during the polymerization of said thermosetting resin the insert (3) is permanently anchored to the body (2), thereby providing a monolithic assembly therebetween.

2. Support structure as claimed in claim 1, **characterized in that** said fibrous membrane (6) is selected from the group consisting of carbon fibers, glass fibers.

3. Support structure as claimed in claim 1, **characterized in that** it comprises a polymeric cover layer (7), placed above said at least one insert (3) and the top surface (S') of said polymer matrix (5).

4. Support structure as claimed in claim 3, **characterized in that** said cover layer (7) is of the transparent type.

5. Support structure as claimed in claim 1, **characterized in that** said viscoelastic material (3) is a gel material.

6. Support structure as claimed in claim 5, **characterized in that** said gel is selected from the group of polyurethane gels.

7. A process for making an ergonomic support structure (1) of composite material for supporting parts of the human body, as claimed in one or more of claims 1 to 6, comprising the steps of:
a) providing at least one reinforcement member (4) having a predetermined resistance to compressive and/or shearing stresses and at least one polymer matrix (5), wherein said reinforcement member (4) is made by a fibrous membrane (6) preimpregnated with the at least one polymer matrix (5) to form a main body (2);
b) providing a mold with an inner cavity of a predetermined shape corresponding to the external configuration of said main body (2) of said support structure (1);
c) opening said mold and depositing therein said at least one reinforcement member (4) embedded in said at least one polymer matrix (5);
d) placing in said mold at least one insert (3) of a viscoelastic material, wherein said at least one insert (3) is placed over said at least one reinforcement member (4) to define a free contact surface (S) for a user susceptible of controlled deformation;
e) sealing said mold and heating it to a predetermined operating temperature;
f) cooling said mold to a predetermined final temperature;
g) opening said mold and removing the finishing support structure (1) therefrom;
**characterized in that** said polymer matrix (5) is essentially composed of at least one thermosetting resin, said operating temperature being close to the glass transition temperature of said polymer matrix (5), so that during the polymerization of said thermosetting resin the insert (3) is permanently anchored to the body (2), thereby providing a monolithic assembly therebetween.

8. A process for making an ergonomic support structure (1) of composite material for supporting parts of the human body, as claimed in one or more of claims 1 to 6, comprising the steps of:
a) providing at least one reinforcement member (4) having a predetermined resistance to compressive and/or shearing stresses and at least one polymer matrix (5), wherein said reinforcement member (4) is provided in the form of a sheet including a fibrous membrane (6);
b) providing a mold with an inner cavity of a predetermined shape corresponding to the external configuration of a main body (2) of a support structure (1), wherein said mold has one or more apertures for injection of at least one polymer matrix (5);
c) opening said mold and depositing therein said at least one reinforcement member (4);
d) placing in said mold at least one insert (3) of a viscoelastic material, wherein said at least one insert (3) is placed over said at least one reinforcement member (4) to define a free contact surface (S) for a user susceptible of controlled deformation;
e) sealing said mold, injecting at least one polymer matrix (5) and heating the mold to a predetermined operating temperature;
f) cooling said mold to a predetermined final temperature;
g) opening said mold and removing the finishing support structure (1) therefrom;
**characterized in that** said polymer matrix (5) is essentially composed of at least one thermosetting resin, said operating temperature being close to the glass transition temperature of said polymer matrix (5), so that during the polymerization of said thermosetting resin the insert (3) is permanently anchored to the body (2), thereby providing a monolithic assembly therebetween.

9. Process as claimed in claim 7 or 8, **characterized in that** it comprises a step in which a polymeric cover layer (7) is placed above said at least one insert (3) and the top surface (S') of said reinforcement member (4).

10. A process as claimed in claim 7 or 8, **characterized in that** said mold has at least one carved housing for receiving said at least one viscoelastic insert (3).

11. A process as claimed in claim 7 or 8, **characterized in that** said predetermined operating temperature is of 20°C to 300°C and is preferably of about 120°C.

12. A process as claimed in claim 7 or 8, **characterized in that** said predetermined final temperature is of 18°C to 50°C and is preferably of about 20°C.

## Patentansprüche

1. Eine ergonomische Stützstruktur (1) aus Verbundmaterial zum Stützen von Teilen des menschlichen Körpers, einen Hauptkörper (2) und einen viskoelastischen Einsatz (3) umfassend, wobei der Hauptkörper (2)aus Verbundmaterial besteht, das wenigstens ein Verstärkungselement (4) aufweist und wenigstens eine polymere Matrix (5), wobei das Verstärkungselement (4) einen vorbestimmten Widerstand gegen Kompressions- und/oder Scherbelastung besitzt und eine Fasermembran (6) aufweist, die wenigstens einer polymeren Matrix (5) zugeordnet und in diese eingebettet ist, **dadurch gekennzeichnet, dass** der wenigstens eine Einsatz (3) im Hauptkörper (2) verankert und oberhalb des Verstärkungselements (4) positioniert ist, um eine freie, kontrolliert deformierbare Kontaktfläche (S) für einen Benutzer zu definieren, wobei die polymere Matrix (5) im Wesentlichen aus wenigstens einem wärmehärtenden, mit der Fasermembran (6) und dem Einsatz (3) von auf eine bei jener des Glasübergangs liegenden Temperatur erwärmten Harz besteht, so dass während der Polymerisation des besagten, wärmehärtenden Harzes der Einsatz (3) permanent am Körper (2) verankert wird und mit diesem eine monolithische Einheit bildet.

2. Stützstruktur gemäß Patentanspruch 1, **dadurch gekennzeichnet, dass** die Fasermembran (6) aus der Karbonfasern und Glasfasern umfassenden Gruppe ausgewählt wurde.

3. Stützstruktur gemäß Patentanspruch 1, **dadurch gekennzeichnet, dass** sie eine polymere Deckschicht (7) umfasst, die oberhalb des wenigstens einen Einsatzes (3) sowie an der oberen Oberfläche (S') der polymeren Matrix (5) positioniert ist.

4. Stützstruktur gemäß Patentanspruch 3, **dadurch gekennzeichnet, dass** die Deckschicht (7) transparent ist.

5. Stützstruktur gemäß Patentanspruch 1, **dadurch gekennzeichnet, dass** das viskoelastische Material (3) ein Gelmaterial ist.

6. Stützstruktur gemäß Patentanspruch 5, **dadurch gekennzeichnet, dass** besagtes Gel aus der Gruppe der Polyurethane ausgewählt ist.

7. Verfahren für die Herstellung einer ergonomischen Stützstruktur (1) aus Verbundmaterial zum Stützen von Teilen des menschlichen Körpers gemäß eines beliebigen der Patensprüche von 1 bis 6, folgende Phasen umfassend:
a) Vorbereitung von wenigstens einem Verstärkungselement (4) mit einem vorbestimmten Widerstand gegen Kompressions- und/oder Scherbelastung und wenigstens einer polymeren Matrix (5), wobei das Verstärkungselement (4) aus einer mit wenigstens einer polymeren Matrix (5) vorimprägnierten Fasermembran (6) besteht, um einen Hauptkörper (2) zu bilden;
b) Vorbereitung eines Formwerkzeugs mit einem inneren Hohlraum von vorbestimmter Form, welche der externen Konfiguration des Hauptkörpers (2) der Stützstruktur (1) entspricht;
c) Öffnen des besagten Formwerkzeugs und Ablegen in selbiges von wenigstens einem Verstärkungselement (4), das in die wenigstens eine polymere Matrix (5) eingebettet ist;
d) Einlegen von wenigstens einem Einsatz (3) aus viskoelastischem Material in besagtes Formwerkzeug, wobei dieser wenigstens eine Einsatz (3) sich oberhalb des besagten wenigstens einen Verstärkungselements (4) befindet, um eine freie, kontrolliert verformbare Kontaktfläche (S) für einen Benutzer zu definieren;
e) hermetische Schließung des besagten Formwerkzeugs und Erwärmung desselben auf eine vorbestimmte Betriebstemperatur;
f) Abkühlen des besagten Formwerkzeugs auf eine vorbestimmte Endtemperatur;
g) Öffnen des besagten Formwerkzeugs und Auszug der fertigen Stützstruktur (1) aus selbigem;
**dadurch gekennzeichnet, dass** die polymere Matrix (5) im Wesentlichen aus wenigstens einem wärmehärtenden Harz besteht, wobei die besagte Betriebstemperatur nahe an der Glasübergangstemperatur der polymeren Matrix (5) liegt, so dass während der Polymerisation des besagten, wärmehärtenden Harzes der Einsatz (3) permanent am Körper (2) verankert wird und beide eine Einheit bilden.

8. Verfahren für die Herstellung einer ergonomischen Stützstruktur (1) aus Verbundmaterial zum Stützen von Teilen des menschlichen Körpers gemäß eines beliebigen der Patentansprüche von 1 bis 6, folgende Phasen umfassend:
a) Vorbereitung von wenigstens einem Verstärkungselement (4) mit einem vorbestimmten Widerstand gegen Kompressions- und/oder Scherbelastung und wenigstens einer polymeren Matrix (5), wobei das Verstärkungselement (4) in Form eines Blattes ausgeführt ist, das eine Fasermembran (6) enthält;
b) Vorbereitung eines Formwerkzeugs mit einem inneren Hohlraum von vorbestimmter Form, welche der externen Konfiguration eines Hauptkörpers (2) einer Stützstruktur (1) entspricht, wobei besagtes Formwerkzeug eine oder mehrere Öffnungen zum Einspritzen von wenigstens einer polymeren Matrix (5) aufweist;
c) Öffnen des besagten Formwerkzeugs und Ablegen des wenigstens einen Verstärkungselements (4) in selbiges;
d) Einlegen von wenigstens einem Einsatz (3) aus viskoelastischem Material in besagtes Formwerkzeug, wobei dieser wenigstens eine Einsatz (3) sich oberhalb des besagten wenigstens einen Verstärkungselements (4) befindet, um eine freie, kontrolliert verformbare Kontaktfläche (S) für einen Benutzer zu definieren;
e) hermetische Schließung des besagten Formwerkzeugs, Einspritzung von wenigstens einer polymeren Matrix (5) und Erwärmung des Formwerkzeugs auf eine vorbestimmte Betriebstemperatur;
f) Abkühlen des besagten Formwerkzeugs auf eine vorbestimmte Endtemperatur;
g) Öffnen des besagten Formwerkzeugs und Auszug der fertigen Stützstruktur (1) aus selbigem;
**dadurch gekennzeichnet, dass** die polymere Matrix (5) im Wesentlichen aus wenigstens einem wärmehärtenden Harz besteht, wobei die besagte Betriebstemperatur nahe an der Glasübergangstemperatur der polymeren Matrix (5) liegt, so dass während der Polymerisation des besagten, wärmehärtenden Harzes der Einsatz (3) permanent am Körper (2) verankert wird und beide eine Einheit bilden.

9. Verfahren gemäß den Patentansprüchen 7 oder 8, **dadurch gekennzeichnet, dass** es eine Phase umfasst, in der eine polymere Deckschicht (7) oberhalb des wenigstens einen Einsatzes (3) und an der oberen Oberfläche (S') des Verstärkungselements (4) positioniert wird.

10. Verfahren gemäß den Patentansprüchen 7 oder 8, **dadurch gekennzeichnet, dass** das besagte Formwerkzeug wenigstens eine eingesenkte Aufnahme für den wenigstens einen, viskoelastischen Einsatz (3) umfasst.

11. Verfahren gemäß den Patentansprüchen 7 oder 8, **dadurch gekennzeichnet, dass** die besagte, vorbestimmte Betriebstemperatur zwischen 20°C und 300°C liegt und vorzugsweise circa 120°C beträgt.

12. Verfahren gemäß den Patentansprüchen 7 oder 8, **dadurch gekennzeichnet, dass** die besagte, vorbestimmte Betriebstemperatur zwischen 18°C und 50°C liegt und vorzugsweise circa 20°C beträgt.

## Revendications

1. Une structure de support (1) ergonomique en matériau composite pour le support de parties du corps humain, comprenant un corps principal (2) et un insert (3) viscoélastique, dans lequel ledit corps principal (2) est constitué d'un matériau composite avec au moins un élément de renfort (4) et au moins une matrice polymère (5), ledit élément de renfort (4) ayant une résistance prédéterminée aux contraintes de compression et/ou de coupe et comprenant une membrane fibreuse (6) associée et insérée dans au moins une matrice polymère (5), **caractérisée en ce que** ledit au moins un insert (3) est fixé dans ledit corps principal (2) et positionné au-dessus dudit élément de renfort (4) afin de créer une surface libre de contact (S) pour un utilisateur sujette à déformation contrôlée, ladite matrice polymère (5) étant substantiellement composée d'au moins une résine thermodurcissante chauffée avec ladite membrane fibreuse (6) et ledit insert (3) à une température proche de la température de transition vitreuse, de sorte que, pendant la polymérisation de ladite résine thermodurcissante, l'insert (3) soit fixé de manière permanente au corps (2), constituant un groupe monolithique entre eux.

2. Structure de support selon la revendication 1, **caractérisée en ce que** ladite membrane fibreuse (6) a été sélectionnée dans le groupe comprenant des fibres de carbone et des fibres de verre.

3. Structure de support selon la revendication 1, **caractérisée en ce qu'**elle comprend une couche de couverture (7) polymère, positionnée sur ledit au moins un insert (3) et sur la surface supérieure (S') de ladite matrice polymère (5).

4. Structure de support selon la revendication 3, **caractérisée en ce que** la couche de couverture (7) est de type transparent.

5. Structure de support selon la revendication 1, **caractérisée en ce que** ledit matériau viscoélastique (3) est un matériau en gel.

6. Structure de support selon la revendication 5, **caractérisée en ce que** ledit gel a été sélectionné dans le groupe des gels polyuréthanes.

7. Procédé pour la réalisation d'une structure de support (1) ergonomique en matériau composite pour le support de parties du corps humain, selon l'une quelconque des revendications de 1 à 6, comprenant les phases suivantes :
a) préparation d'au moins un élément de renfort (4) avec une résistance prédéterminée aux contraintes de compression et/ou de coupe et d'au moins une matrice polymère (5), avec ledit élément de renfort (4) composé d'une membrane fibreuse (6) pré-imprégnée avec au moins une matrice polymère (5) pour former un corps principal (2) ;
b) préparation d'un moule avec une cavité interne de forme prédéterminée qui correspond à la configuration externe dudit corps principal (2) de ladite structure de support (1) ;
c) ouverture dudit moule et dépôt dans celui-ci dudit au moins un élément de renfort (4) incorporé à ladite au moins une matrice polymère (5) ;
d) introduction dans ledit moule d'au moins un insert (3) en matériau viscoélastique, dans lequel ledit au moins un insert (3) est placé sur ledit au moins un élément de renfort (4) afin de créer une surface libre de contact (S) pour un utilisateur sujette à déformation contrôlée ;
e) fermeture hermétique dudit moule et chauffage de celui-ci à une température de travail prédéterminée ;
f) refroidissement dudit moule à une température finale prédéterminée ;
g) ouverture dudit moule et extraction de la structure de support (1) finie ; **caractérisé en ce que** ladite matrice polymère (5) est substantiellement composée d'au moins une résine thermodurcissante, ladite température de travail étant proche de la température de transition vitreuse de ladite matrice polymère (5), de sorte que, pendant la polymérisation de ladite résine thermodurcissante, l'insert (3) soit fixé de manière permanente au corps (2), constituant un groupe monolithique entre eux.

8. Procédé pour la réalisation d'une structure de support (1) ergonomique en matériau composite pour le support de parties du corps humain, selon l'une quelconque des revendications de 1 à 6, comprenant les phases suivantes :
a) préparation d'au moins un élément de renfort (4) avec une résistance prédéterminée aux contraintes de compression et/ou de coupe et d'au moins une matrice polymère (5), avec ledit élément de renfort (4) réalisé en forme de feuille et comprenant une membrane fibreuse (6) ;
b) préparation d'un moule avec une cavité interne de forme prédéterminée qui correspond à la configuration externe d'un corps principal (2) d'une structure de support (1), dans lequel ledit moule est doté d'une ou de plusieurs ouvertures pour l'injection d'au moins une matrice polymère (5) ;
c) ouverture dudit moule et dépôt dans celui-ci dudit au moins un élément de renfort (4) ;
d) introduction dans ledit moule d'au moins un insert (3) en matériau viscoélastique, dans lequel ledit au moins un insert (3) est placé au-dessus dudit élément de renfort (4) afin de créer une surface libre de contact (S) pour un utilisateur sujette à déformation contrôlée ;
e) fermeture hermétique dudit moule, injection d'au moins une matrice polymère (5) et chauffage du moule à une température de travail prédéterminée ;
f) refroidissement dudit moule à une température finale prédéterminée ;
g) ouverture dudit moule et extraction de la structure de support (1) finie ;
**caractérisé en ce que** ladite matrice polymère (5) est substantiellement composée d'au moins une résine thermodurcissante, ladite température de travail étant proche de la température de transition vitreuse de ladite matrice polymère (5), de sorte que, pendant la polymérisation de ladite résine thermodurcissante, l'insert (3) soit fixé de manière permanente au corps (2), constituant un groupe monolithique entre eux.

9. Procédé selon les revendications 7 ou 8, **caractérisé en ce qu'**il comprend une phase dans laquelle une couche de couverture (7) polymère est positionnée sur ledit au moins un insert (3) et la surface supérieure (S') dudit élément de renfort (4).

10. Procédé selon les revendications 7 ou 8, **caractérisé en ce que** ledit moule présente au moins un logement incisé pour recevoir ledit au moins un insert viscoélastique (3).

11. Procédé selon les revendications 7 ou 8, **caractérisé en ce que** ladite température de travail prédéterminée est comprise entre 20 et 300° C, de préférence autour de 120° C.

12. Procédé selon les revendications 7 ou 8, **caractérisé en ce que** ladite température finale prédéterminée est comprise entre 18 et 50° C, de préférence autour de 20° C.
